# EUROPÄISCHE PATENTSCHRIFT

(11) **EP 3 237 099 B1**
(45) Veröffentlichungstag und Bekanntmachung des Hinweises auf die Patenterteilung: **02.01.2019**
(21) Anmeldenummer: 15820838.9
(22) Anmeldetag: 18.12.2015
(51) Int. Cl.: B01D 63/02, B65B 27/10, B29C 65/00, B29C 63/06, B29C 63/18, B65B 13/16, B65B 19/34, B65B 49/08

(54) **VORRICHTUNG UND VERFAHREN ZUR HERSTELLUNG VON FADENBÜNDELN**
DEVICE AND METHOD FOR PRODUCING A THREAD BUNDLE
DISPOSITIF ET PROCÉDÉ DE PRODUCTION DE FAISCEAUX DE FIBRES

(30) Priorität: 23.12.2014 DE 102014019506
(43) Veröffentlichungstag der Anmeldung: 01.11.2017
(73) Patentinhaber: Filatech Filament Technology u. Spinnanlagen GmbH, 53424 Remagen (DE)
(72) Erfinder: REUSCHENBACH, Hermann, 80807 München (DE)
(74) Vertreter: Herzog, Markus
(86) Internationale Anmeldenummer: PCT/EP2015/080486
(87) Internationale Veröffentlichungsnummer: WO 2016/102364

(56) Entgegenhaltungen:
- EP-A2- 2 089 304
- DE-A1- 19 806 293
- DE-U1-202010 009 887
- JP-A- 2009 280 288
- JP-A- 2013 203 425
- US-A- 4 141 289

## Beschreibung

Die vorliegende Erfindung betrifft Vorrichtungen und Verfahren, bei denen ein Strang aus einer Vielzahl von Einzelfäden mit einer Folie umwickelt und zu einem angenähert kreisrunden Querschnitt geformt wird, insbesondere bei semipermeablen Hohlfäden, wie sie z.B. bei Filtereinrichtungen für Dialyse und andere Stoffaustauschverfahren benutzt werden.

Derartige Fäden werden in Spinnanlagen produziert und anschließend auf einer rotierenden Haspel gesammelt, bis ein Strang aus der gewünschten Anzahl von Einzelfäden entstanden ist. Bei herkömmlichen Produktionsanlagen besitzt die Haspel mehrere am Umfang verteilte Tragarme (auch "Zinken" oder "Wickeldorne" genannt) zur Aufnahme der Faden die dadurch ein Polygon bilden. Die einzelnen Seiten des Polygons werden dann von Hand mit Folie umwickelt und dabei zu einem Strang mit kreisrundem Querschnitt geformt. Nachdem der Strang mit Hilfe der Folie fixiert wurde, können daraus Bündel mit der gewünschten Länge für die Weiterverarbeitung abgetrennt werden. Diese Arbeitsgänge erfordern einen hohen Personalaufwand und können leicht zu Fehlern führen.

Bei neueren automatisierten Produktionsanlagen, wie z B. in EP 2 089 304 B1 dargestellt ist, besteht die Haspel aus einem rotierenden Balken mit nur zwei Tragarmen an den Enden. Dabei entsteht ein linear ausgebildeter Strang, der direkt an der Haspel mit Folie umwickelt und fixiert wird. Diese Anordnung wird in der Praxis vielfach eingesetzt, um sowohl den Haspel-Vorgang als auch die Bündel-Konfektionierung zu automatisieren.

Es ist üblich, Hohlfäden für Filtereinrichtungen in Form einer Wellenlinie herzustellen, damit sie sich gegenseitig auf Abstand halten und dadurch eine gleichmäßige Umströmung ermöglichen, was zu einem verbesserten Stoffaustausch führen soll. Es ist auch bekannt, dass die Filterleistung durch eine höhere Packungsdichte (= Summe der Fadenquerschnitte bezogen auf die Gesamt-Filterquerschnittsfläche) zu verbessern ist, ebenfalls bewirkt durch eine verbesserte Strömungsverteilung. Demzufolge ist es vorteilhaft, den Strang beim Umwickeln mit Folie entgegen der Rückstellkraft der Wellen-Struktur der Faden stärker zu komprimieren, um so Filtereinrichtungen mit höherer spezifischer Leistung zu erhalten, ohne die Membranfläche, also die Anzahl der eingesetzten Hohlfaden, zu erhöhen.

Eine Besonderheit bei der Verarbeitung von semipermeablen Hohlfäden besteht darin, dass es sich wegen der geringen Wandstärke (ca. 0,1 mm oder weniger) um ein sehr empfindliches Produkt handelt. Wenn ein einziger der zehn- oder fünfzehntausend Fäden in einem Strang eingeklemmt oder durch Zug- oder Druckbelastung beschädigt wird, werden z.B. bei einer Linearhaspel in der Regel alle 10 oder 12 daraus hergestellten Filter unbrauchbar.

Weiterhin ist erschwerend, dass ein aufgehaspelter Strang, insbesondere bei einer Linearhaspel, sehr unterschiedliche Querschnitte bilden kann, bedingt durch streuende Spannung in den einzelnen Fäden und durch elektrostatische Aufladung.

Daher sind viele der aus Literatur oder Praxis bekannten Verfahren und Vorrichtungen zum Umwickeln von Produkten für die hier beschriebene Anwendung nicht geeignet.

Es sind mehrere Lösungsansätze bekannt, um das Umwickeln von Hohlfadenbündeln zu mechanisieren bzw. zu automatisieren:
In den Patentschriften DE 198 06 293 C2 und EP 2 420 464 B1 wird vorgeschlagen, die Folie und den Fadenstrang in eine offene flexible Rinne aus Stahlblech zu legen, die dann zu einem kreisförmigen Querschnitt umgeformt wird; dabei wird die Folie über zusätzliche "Umleger" so geführt, dass sich ihre Randbereiche überlappen. Nachteilig an beiden Ausführungen ist, dass die Bündeldurchmesser nur in einem relativ engen Bereich variiert werden können. Beim Umstellen auf Bündeln mit deutlichen Durchmesser-Unterschieden müssen die Vorrichtungen umgerüstet oder ausgewechselt werden; dazu ist eine Produktionsunterbrechung erforderlich. Ein weiterer Nachteil besteht darin, dass die Packungsdichte begrenzt ist, weil bei stärkerer Kompression, also höherem Innendruck im Bündel, die Reibung zwischen den sich überlappenden Folienrändern bzw. zwischen Folie und Fäden so groß werden kann, dass die Folie ausknickt. Bei beiden Ausführungen besteht möglicherweise die Gefahr, dass die Blechrinne durch die Biege-Wechselbelastung beim Öffnen und Schließen infolge Dauerbruch vorzeitig unbrauchbar wird.

Bei der oben erwähnten Ausführung nach EP 2 420 464 B1 ist zusätzlich noch ein größerer Aufwand an Antriebs- und Steuerungstechnik erforderlich, weil der Fadenstrang beim Schließen der Rinne seine Höhenlage in wechselnder Richtung verändert; deshalb muss die gesamte Wickelvorrichtung oder die Halterung des Fadenstrangs fortwährend nachgeführt werden.

Bei dem Verfahren aus der Anmeldung EP 1 031 526 A2 wird die Folie über rechtwinklige Umlenkungskanten gezogen. Dabei besteht die Gefahr, dass die Folie beschädigt wird und dass einzelne Fäden in den Spalt zwischen den beiden Folien-Rändern hineingezogen werden können. Aus diesen Gründen dürfte diese Lösung auch nur für Bündel mit niedriger Packungsdichte in Frage kommen. Für die Weiterverarbeitung ist auch nachteilig, dass die verschweißten Folienränder nicht überlappen, sondern rechtwinklig vom Bündel abstehen.

Die Patentanmeldung EP 0 490 789 B1 (entsprechend US 5,449,430) beschreibt ein Verfahren, um Hohlfäden auf einer Trommel zu einer Matte aufzuwickeln, die Matte dann flach auf einem Tisch abzulegen und zu einem Bündel aufzurollen. Dieser Vorschlag entspricht nicht den Fertigungsverfahren, auf die sich die vorliegende Erfindung bezieht, und dürfte auch nicht mit den oben beschriebenen Haspel-Bauarten zu kombinieren sein.

Die US 802,713 behandelt die Herstellung von glasfaserverstärkten Rohren oder Schläuchen, die mit Kunststoff-Folie umhüllt werden Das Verfahren erscheint ungeeignet für die eben beschriebene Herstellung von Hohlfaden-Bündeln.

Das Verfahren laut US 2006/0231193 A1 zeigt das Aufbringen eines Schutzüberzugs für zylindrische Bauteile, die aber eine feste Kontur haben müssen. Die Umhüllung eines Hohlfaden-Strangs durfte damit nicht möglich sein.

Die JP 2009 280288 A zeigt eine Vorrichtung nach dem Oberbegriff von Anspruch 1.

Ziel der vorliegenden Erfindung ist es, Vorrichtungen und Verfahren für die Herstellung von Fadenbündeln bereitzustellen, die die oben beschriebenen Nachteile bekannter Ausführungen vermeiden, und die insbesondere
- einen vollautomatischen Ablauf ermöglichen,
- auch Fadenstränge umhüllen können, die einen nicht definierten unregelmäßigen Querschnitt haben,
- für einen großen Bereich von Bündeldurchmessern ohne mechanisches Umrüsten geeignet sind,
- die Herstellung von Bündel mit höherer Packungsdichte erlauben,
- ein kompaktes Design mit niedriger Bauhöhe aufweisen,
- sowohl an Anlagen mit Linear-Haspel als auch mit Polygon-Haspel betrieben werden können,
- mit denen die Bündel sowohl direkt an einer Haspel als auch in einer separaten Wickelvorrichtung konfektioniert werden können,
- bei denen nicht die Gefahr besteht, dass einzelne Faden zwischen den Rändern der Folie eingeklemmt werden,
- die nicht durch vorzeitigen Verschleiß oder Dauerbruch gefährdet sind, und/oder die
- mit einem möglichst geringen mechanischen und steuerungstechnischen Aufwand zu realisieren sind.

Diese Ziele werden durch eine Vorrichtung mit den in Patentanspruch 1 dargestellten Merkmalen und durch die in den weiteren Ansprüchen genannten Verfahren erreicht.

Anhand der nachfolgenden Zeichnungen werden Funktionsweise und Vorteile der Erfindung näher erläutert.

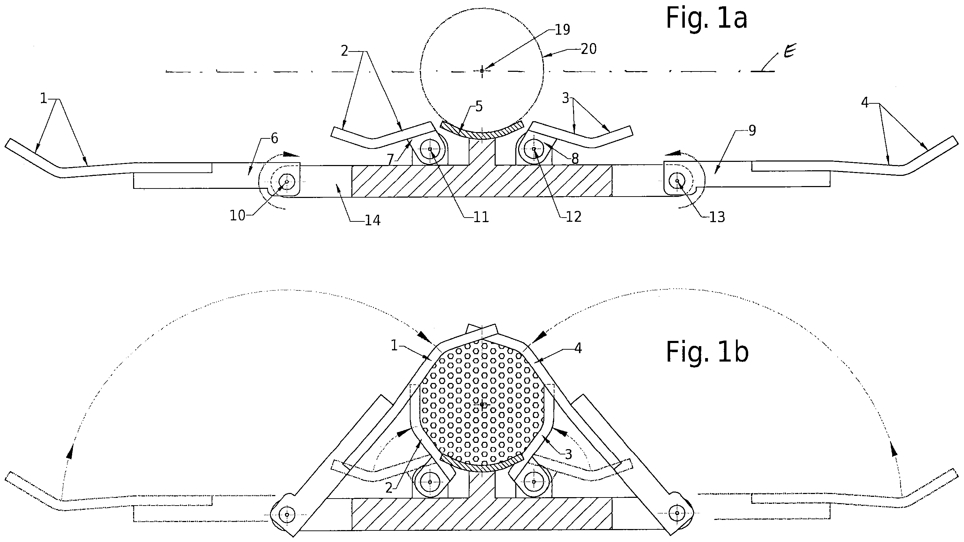

Fig. 1a und Fig. 1b zeigen vereinfacht das Funktionsprinzip der Vorrichtung, bei dem mehrere einzelne Formsegmente 1...4 so verfahren werden, dass sie gemeinsam eine geschlossene Zylinder-ähnliche Form bilden.

Vier oder mehr Formsegmente 1 ... 4, die im vorliegenden Beispiel im Querschnitt durch zwei abgewinkelte Linien gebildet werden, sind jeweils über Verlängerungsarme 6 ... 9 an einem Gestell 14 unabhängig voneinander drehbar gelagert. Die Drehpunkte 10 ... 13 sind so gewählt, dass die Querschnitte der Formsegmente, wenn sie eine Schwenkbewegung zur Mittelachse 19 (z.B. eines Bündels) hin ausführen, gemeinsam einen geschlossenen Linienzug bilden, wenn sie sich einem Kreisumfang 20 nähern.

Es ist vorteilhaft, wenn zusätzlich zu den beweglichen Formsegmenten 1 ... 4 noch ein weiteres, fest mit dem Gestell 14 verbundenes Formsegment 5 vorgesehen ist, das ggf. Sauger enthalten kann, um die Folie während des Wickelvorgangs festzuhalten.

Weiterhin ist vorteilhaft, wenn symmetrisch zum ortsfesten Formsegment 5 beidseitig jeweils zwei drehbare Formsegmente angeordnet sind.

Alle Formsegmente erstrecken sich in axialer Richtung über die ganze Länge des Fadenstranges, ggf. unterbrochen oder mit Aussparungen versehen für den Zugang von Werkzeugen zum Fixieren oder Durchtrennen des Strangs.

Die Drehpunkte 10 ... 13 der jeweiligen Formsegmente 1 ... 4 sind an der selben Seite, hier unterhalb einer die Mittelachse 19 enthaltenden, hier horizontalen Ebene E, an dem langgestreckten Gestell 14 drehbar gelagert. Hierbei sind die Drehachsen 10, 13 der beiden vom Bündel 20 weiter entfernten Formsegmente 1, 4 weiter von der horizontalen Ebene E und auch weiter von der Mittelachse 19 entfernt angeordnet als die Drehachsen 11, 12 der beiden dem Bündel 20 näheren Formsegmente 2, 3. Wenn die beiden dem Bündel 20 näheren Formsegmente 2, 3 an diesem anliegen, werden die beiden entfernteren Formsegmente 1, 4 über die erstgenannten Formsegmente 2, 3 hinweg verschwenkt, so dass sie auf der vom festen Formsegment 5 entfernten Oberseite des Bündels 20 anliegen und das Bündel 20 so zusammendrücken, dass es einen insgesamt angenähert kreisförmigen Querschnitt bekommt.

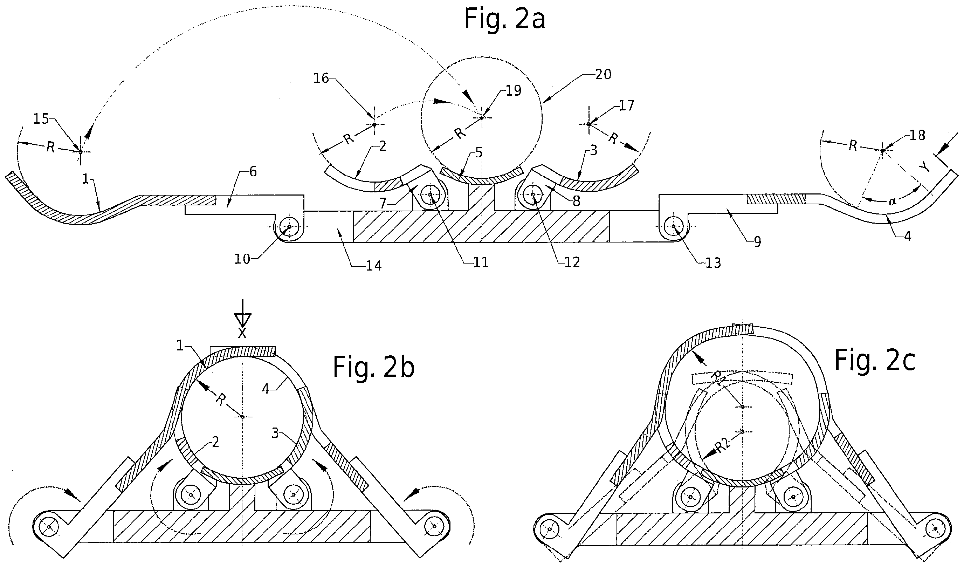

Fig. 2a stellt einen Sonderfall dar, bei dem die Formsegmente 1 ... 4 als Kreisbögen ausgebildet sind, deren Krümmungsradius R dem einer mittleren Bündelgröße entspricht. Die Kreisbögen sind beidseitig über den Bereich des Mittelpunktswinkel α hinaus, der die Größe der Kreisbögen bestimmt, in tangentialer Richtung um den Betrag "Y" verlängert. Dadurch wird erreicht, dass in den angenäherten Kreiskonturen, wie sie in Fig. 2c angedeutet sind, keine scharfkantigen Übergänge zwischen benachbarten Kreisbögen entstehen.

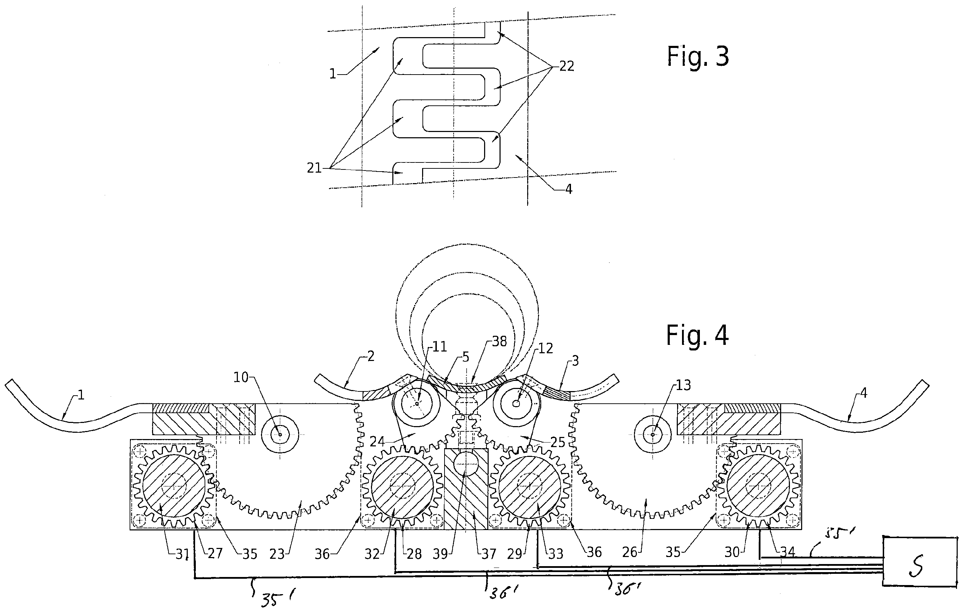

Damit benachbarte Begrenzungsflächen sich überschneiden können, sind sie mit Aussparungen in ihren Randbereichen versehen, siehe Fig.3.

Fig. 2b zeigt eine Position, bei der kreisbogenförmige Formsegmente 1 ... 4 soweit geschwenkt wurden, bis ihre Krümmungsmittelpunkte (15; 16; 17; 18) auf dem Mittelpunkt 19 des Kreisumfangs 20 liegen. Die Kreisbögen bilden dann zusammen naturgemäß exakt den Umfang eines geschlossenen Kreises mit dem Radius R.

In Fig. 2c ist zu sehen, dass durch andere Schwenkwinkel der Formsegmente auch größere oder kleinere Querschnitte mit einer angenäherten Kreisform gebildet werden können. Nebeneinanderliegende Kreisbögen schneiden sich dabei unter einem flachen Winkel; dies ist wichtig dafür, dass die Folie beim Komprimieren der Fäden an diesen Stellen nicht ausknickt.

Die maximale Abweichung der Radien R1 und R2 von einer idealen Kreislinie beträgt bei den dargestellten Beispielen weniger als 1 mm (z.B. bei einem Bündel-Durchmesser von 29 mm).

Dieser Fehler dürfte für die Praxis zu vernachlässigen sein, da der Außenumfang eines fertigen Bündels aufgrund der Rückstellkrafte der komprimierten Fäden sich weitgehend wieder einer Kreisform anpasst.

In dem hier abgebildeten Beispiel verhalten sich die Flächeninhalte des größten zum kleinsten Querschnitt etwa wie 2,5 : 1. In diesem Verhältnis können auch die so produzierten Bündelgrößen variieren, was z.B. dem marktüblichen Angebotsspektrum von unterschiedlichen Filtergrößen für die Dialyse entspricht.

Das bedeutet also, dass mit ein und derselben Vorrichtung alle gängigen Filtergrößen hergestellt werden können.

Wenn als Antriebe für die Bewegung der Formsegmente Schritt- oder Servomotoren vorgesehen sind, muss für eine Durchmesser-Umstellung lediglich das Fahrprogramm der zugehörigen Fositioniersteuerung umgeschaltet werden; d h. während der laufenden Produktion kann ohne Unterbrechung auf andere Formate umgestellt werden.

Fig. 3 zeigt die Ansicht "X" aus der Fig. 2b, dargestellt als Abwicklung der gewölbten Flächen. Da sich die Formsegmente überschneiden sollen, sind in den Randbereichen Aussparungen 21 und 22 vorgesehen, in die nicht ausgesparte Bereiche der benachbarten Formsegmente eintauchen können, ohne sich gegenseitig zu behindern. In Fig. 3 sind als Beispiel die Begrenzungsflächen 1 und 4 dargestellt; für die anderen Paarungen gelten entsprechende Anordnungen.

Über dem Umfang und und in Richtung der Längsachse gesehen entsteht so eine weitgehend geschlossene zylindrische Form, die den Fadenstrang an seiner ganzen Oberfläche umfassen kann.

Fig. 4 zeigt als Beispiel die konstruktive Ausführung einer Wickelvorrichtung mit praxisgerechten Abmessungen. Die Formsegmente 1 ... 4 sind je nach Baulänge der Vorrichtung mehrfach an den Drehpunkten 10 ...13 gelagert und koaxial mit Zahnsegmenten 23 ... 26 verbunden, die wiederum mit den Zahnrädern 27 ... 30 auf den durchgehenden Wellen 31 ... 34 im Eingriff stehen. Die Wellen sind je nach Erfordernis mehrfach zwischengelagert und werden von einer Seite aus von Getriebemotoren (35, 36) angetrieben.

Das ortsfeste Formsegment 5 ist mit einem Mittelsteg 37 verbunden. Darin sind an mehreren Stellen Sauger 38 eingebettet, die über die durchgehende Leitung 39 mit Vakuum versorgt werden.

Die Formsegmente sind - in axialer Richtung gesehen - an mehreren Stellen unterbrochen, damit dort Werkzeuge zum Fixieren des Fadenstrangs oder zum Abtrennen der Bündel Zugang haben.

Die Vorrichtung lässt sich in Richtung der Bündel-Längsachse mit einer beliebigen Baulänge ausführen, angefangen für ein einzelnes Bündel auf einer Polygon-Haspel bis zu einem Strang für 10 oder 12 Bündel auf einer Linear-Haspel. Durch das Aneinanderreihen von gleichartigen Bauteilen ist eine rationelle Herstellung der Vorrichtung möglich.

Die niedrige Bauhöhe, die z.B. bei dem Ausführungsbeispiel von Fig 4 in geöffneter Position etwa 50 mm beträgt, ermöglicht den Zugang auch bei beengten Platzverhaltnissen, z.B., wenn der Fadenstrang direkt auf einer Polygon-Haspel mit Folie umwickelt werden soll.

Die Getriebemotoren 35, 36 der vier Formsegmente 1 bis 4 sind jeweils unabhängig voneinander betreibbar und über jeweiligen Leitungen 35', 36' mit einem gemeinsamen Steuergerät S verbunden.

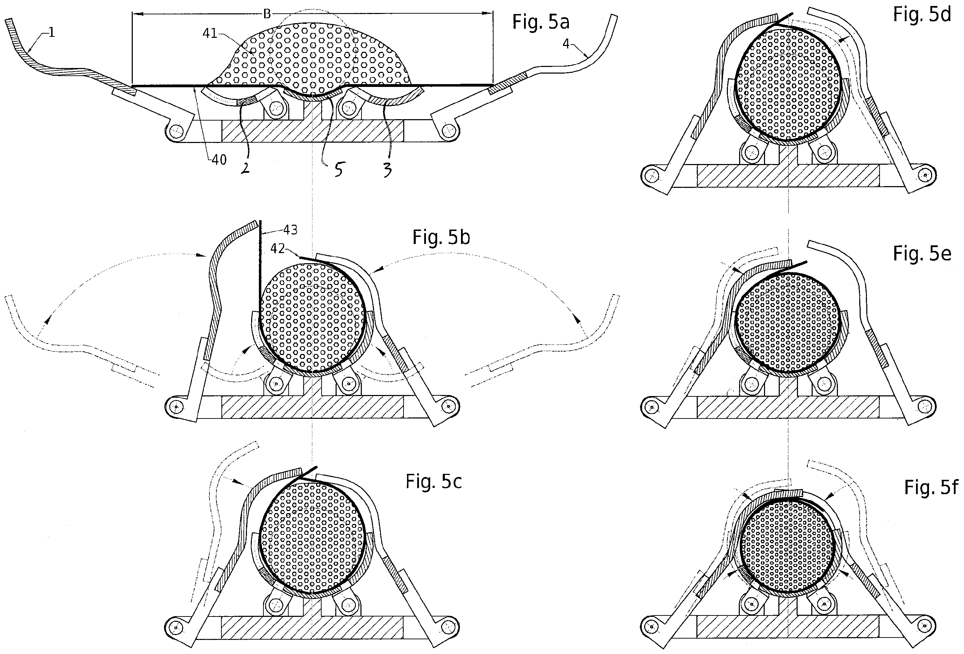

Fig. 5 zeigt verschiedene Etappen beim Umwickeln und Komprimieren eines Fadenstrangs. In der Ausgangsstellung von Fig. 5a sind die Formsegmente 1 ... 4 weit geöffnet, so dass die Folie 40 und der Fadenstrang 41 dort abgelegt werden können. Der Fadenstrang 41 hat insbesondere bei einer Linear-Haspel zunächst noch eine undefinierte und unregelmäßige Kontur. Damit alle Fäden des Strangs sicher umfasst werden können, ist die Breite B der Folie größer als die Umfangslänge des zu formenden Bündels.

Durch Schwenkbewegungen der Formsegmente 1 ... 4 wird die Folie soweit gebogen, dass sie den Fadenstrang teilweise umschließt, wobei einer der Folienränder zunächst stärker umgelegt wird als die Gegenseite (Fig. 5b). Hierbei bewegen sich die beiden dem Formsegment 5 benachbarten inneren Formsegmente 2, 3 angenähert gleichzeitig nach oben, um eine das Bündel stützende angenähert halbkreisförmige Rinne zu bilden, und dann bewegen sich die äußeren Formsegmente 1, 4 nacheinander auf das Bündel, um hierbei die Folie 40 auf sich selbst überlappend über dem Bündel zu schließen. Durch wechselseitiges Vor- und Zurückschwenken der äußeren Formsegmente 1 und 4 entsprechend Fig. 5c bis Fig. 5f wird erreicht, dass eine Außenkante 42 der Folie gegen die Innenseite 43 des gegenüberliegenden Folienrands stößt und dort eingeklemmt wird, Dieser Ablauf stellt sicher, dass keine einzelnen Fäden zwischen die sich überlappenden Folienränder geraten, was ein Bündel unbrauchbar machen würde. Der Fadenstrang ist nach dem Schritt 5f vollständig von einer Folie mit sich überlappenden Rändren umschlossen. Dies wird allein durch die Bewegungen der Formsegmente erreicht, ohne dass die Folie durch zusätzliche Werkzeuge, z.B. Folienumleger, von außen gesteuert werden muss. Durch weitere Drehung der Formsegmente 1 ... 4 können die Fäden noch weiter komprimiert werden, wobei sich die überlappenden Folienränder immer weiter übereinander schieben müssen. Eine Grenze ist dann erreicht, wenn die Gefahr besteht, dass die Folie schließlich wegen des zunehmenden Reibungswiderstandes ausknickt.

Eine größere Packungsdichte wird ermöglicht, wenn der Schließbewegung der einzelnen Formsegmente hochfrequente, kurzhubige und gegenläufige Schwingungen überlagert werden, was mit den vorgeschlagenen Servo- oder Schrittmotoren einfach zu realisieren ist. Dieses Verfahren nutzt den Effekt, dass die Federkennlinie der komprimierten Fäden eine gewisse Hysterese aufweist, und dass der durch Kompression erzeugte Innendruck sich nicht in alle Richtungen gleichmäßig fortpflanzt, Dadurch kann vorübergehend eine Druckentlastung und damit Verminderung der Reibung in denjenigen Zonen erzielt werden, wo die Relativbewegungen zwischen Folie, Formsegmenten und Fäden stattfindet.

Nachdem der Strang auf den gewünschten Durchmesser komprimiert worden ist, wird er nach einem der in der Praxis bekannten Verfahren fixiert, indem z.B. die überlappenden Randbereiche der Folie miteinander verschweißt oder mit Klebeband geheftet werden. Anschließend werden daraus Bündel mit einer vorgegebenen Lange geschnitten, entweder direkt in der Wickelvorrichtung, oder außerhalb in einer separaten Trennvorrichtung.

Die Erfindung betrifft somit eine Vorrichtung und Verfahren zur Herstellung von Fadenbündeln, um einen aus vielen Einzelfäden bestehenden Strang (41) mit unregelmäßigem Querschnitt mit einer Folie (40) zu umwickeln und zu kreisrunden Bündeln zu formen, insbesondere für die Produktion von Dialysefiltern.

Von einer derartigen Vorrichtung wird gefordert, dass sie einen vollautomatischen Ablauf ermöglicht, dass auf andere, auch sehr unterschiedliche Bündeldurchmesser ohne Maschinenstop umgestellt werden kann, und dass eine höhere Packungsdichte der Fäden zu erzielen ist.

Vorteilhaft ist zusätzlich ein kompaktes Design mit niedriger Bauhöhe, damit die Bündel auch an schwer zugänglichen Stellen konfektioniert werden können, z.B. direkt an einer herkömmlichen Polygon-Haspel.

Mehrere an einem Gestell (14) drehbar gelagerte Formsegmente (1; 2; 3; 4) mit einer kreisbogenartigen Kontur werden so geschwenkt, dass sie innerhalb eines größeren Winkelbereichs einen durchgehende Linienzug bilden, der mit guter Näherung einem kreisförmigen Querschnitt entspricht. Dadurch können Fäden zu Bündeln mit unterschiedlich großen Durchmessern geformt werden, ohne dass die Vorrichtung ausgetauscht oder mechanisch umgerüstet werden muss.

Durch separate Positionierung der einzelnen Formsegmente wird die Folie (40) so geführt, dass sie den unregelmäßig geformten Fadenstrang (41) vollständig umschließt, ohne einzelne Fäden in den überlappenden Randbereichen einzuklemmen.

Einen höhere Packungsdichte, ohne dass die Folie beim Komprimieren des Bündels ausknickt, wird erreicht, indem der Schließbewegung der einzelnen Formsegmente Schwingungen überlagert werden.

### Liste der Bezugszeichen:

- 1; 2; 3; 4: Formsegmente (drehbar)
- 5: Forrnsegment (ortsfest)
- 6; 7; 8; 9: Verlangerungsarme
- 10,11; 12; 13: Drehpunkte
- 14: Gestell

- 15; 16; 17; 18: Krümmungsmittelpunkte
- 19: Kreismittelpunkt (Mittelachse)
- 20: Kreisumfang
- 21; 22: Aussparungen
- 23; 24; 25; 26: Zahnsegmente
- 27; 28, 29; 30: Zahnräder
- 31; 32; 33; 34: Wellen
- 35; 36: Getriebemotoren
- 37: Mittelsteg
- 38: Sauger
- 39: Vakuumleitung
- 40: Folie
- 41: Fadenstrang
- 42: Außenkante der Folie
- 43: Innenseite der Folie
- B: Breite der Folie
- R: Radius
- X: Ansicht in Fig. 2b
- Y: tangentiale Verlängerung
- d: Mittelpunktswinkel

## Patentansprüche

1. Vorrichtung zur Herstellung von Fadenbündeln, die einen Strang aus einer Vielzahl von Einzelfäden, insbesondere von semipermeablen Hohlfäden für Dialysefilter, mit Folie umwickelt und zu einem Bündel mit angenähert kreisrundem Querschnitt formt, wobei mindestens vier Formsegmente (1; 2; 3; 4) unabhängig voneinander zu einem Kreismittelpunkt (19) hin zu verfahren sind,
**dadurch gekennzeichnet, dass** die vier Formsegmente (1; 2; 3; 4) so geführt werden, dass die Konturen ihrer Querschnitte in der Nähe des zum Kreismittelpunkt (19) gehörenden Kreisumfangs (20) gemeinsam einen geschlossenen Linienzug bilden, der einem Kreis angenähert ist.

2. Vorrichtung nach Anspruch 1, **dadurch gekennzeichnet,**
- **dass** die Formsegmente (1; 2; 3; 4) an einem gemeinsamen Gestell (14) drehbar gelagert sind,
- und **dass** zusätzlich ein ortsfestes Formsegment (5) vorgesehen ist,
- und **dass** symmetrisch dazu beidseitig jeweils zwei drehbare Formsegmente (1; 2) und (3; 4) angeordnet sind.

3. Vorrichtung nach Anspruch 1, **dadurch gekennzeichnet,**
- **dass** die Querschnitte der Formsegmente (1; 2; 3; 4; 5) zur Innenseite hin kreisbogenförmige Konturen haben,
- und **dass** diese beidseitig über den Bereich des Mittelpunktwinkels (α) hinaus in tangentialer Richtung um ein Maß (Y) verlängert sind.

4. Vorrichtung nach Anspruch 1, **dadurch gekennzeichnet,**
**dass** in den Randbereichen der Formsegmente Aussparungen (21; 22) vorgesehen sind, in die nicht ausgesparte Randbereiche von benachbarten Formsegmenten eintauchen können, ohne sich gegenseitig zu berühren.

5. Vorrichtung zur Herstellung von Fadenbündeln nach Anspruch 2,
**dadurch gekennzeichnet,**
**dass** die Formsegmente (1; 2; 3; 4) an dem gemeinsamen Gestell (14) an jeweiligen Drehpunkten (10, 11, 12, 13) unabhängig voneinander angetrieben drehbar gelagert sind.

6. Vorrichtung zur Herstellung von Fadenbündeln nach Anspruch 5,
**dadurch gekennzeichnet,**
**dass** beiderseits des ortsfesten Formsegments (5) jeweils mindestens eines der drehbaren Formsegmente (1; 4) beim Umwickeln des Strangs voneinander unabhängig wechselweise vorwärts und/oder rückwärts bewegbar ist.

7. Vorrichtung nach einem der vorhergehenden Ansprüche, **dadurch gekennzeichnet, dass** jeweilige Schwenkachsen (10; 11, 12, 13) der vier Formsegmente (1; 2, 3, 4) an der selben Seite einer die Mittelachse (19) des Bündels (20) enthaltenden, insbesondere horizontalen Ebene (E) angeordnet sind, insbesondere so, dass die Schwenkachsen (11, 12) der beiden der Mittelachse (19) näheren Formsegmente (2, 3) näher an der Ebene (E) und/oder der Mittelachse (19) angeordnet sind als die Schwenkachsen (10, 13) der beiden anderen, von der Mittelachse (19) weiter entfernten Formsegmente (1, 4).

8. Vorrichtung nach einem der vorhergehenden Ansprüche, **dadurch gekennzeichnet, dass** zumindest zwei der schwenkbaren Formsegmente (1; 2, 3, 4) von jeweils eigenen Antriebselementen (35, 36), insbesondere Elektromotoren, sequentiell schwenkbar antreibbar sind, wobei insbesondere die jeweiligen Antriebselemente (35, 36) über jeweilige Leitungen (35', 36') mit einem gemeinsamen Steuergerät (S) verbunden sind.

9. Verfahren zur Herstellung von Fadenbündeln auf einer Vorrichtung nach einem der Ansprüche 1 bis 8, **dadurch gekennzeichnet,**
**dass** mindestens zwei Formsegmente (1; 4) beim Umwickeln des Strangs wechselweise vorwärts und/oder rückwärts so bewegt werden, dass eine Außenkante (42) der Folie gegen die Innenseite (43) der gegenüberliegenden Folienseite stößt und von dieser dort eingeklemmt wird.

10. Verfahren zur Herstellung von Fadenbündeln auf einer Vorrichtung nach einem der Ansprüche 1 bis 8, **dadurch gekennzeichnet,**
**dass** der Schließbewegung der Formsegmente (1; 2; 3; 4) Schwingungen derart überlagert werden, dass der durch Kompression der Fäden im Bündel entstehende Innendruck in einem Teilbereich des Bündelquerschnitts kurzzeitig erhöht und in einem anderen Teilbereich verringert wird.

## Claims

1. Device for producing thread bundles, which wraps a skein consisting of a plurality of individual threads, in particular of semi-permeable hollow threads for dialysis filters, with film and forms a bundle having an approximately circular cross section, at least four mould segments (1; 2; 3; 4) being intended to be moved independently of one another towards a circle centre (19), **characterised in that** the four mould segments (1; 2; 3; 4) are guided such that the contours of the cross sections thereof together form a closed continuous line in the vicinity of the circle circumference (20) belonging to the circle centre (19), which closed continuous line is approximately circular.

2. Device according to claim 1, **characterised**
- **in that** the mould segments (1; 2; 3; 4) are rotatably mounted on a common frame (14),
- and **in that** a stationary mould segment (5) is additionally provided,
- and **in that** in each case two rotatable mould segments (1; 2) and (3; 4) are arranged on each side symmetrically to said stationary mould segment.

3. Device according to claim 1, **characterised**
- **in that** the cross sections of the mould segments (1; 2; 3; 4; 5) have contours that are arcuate towards the inner face,
- and **in that** these are lengthened on each side beyond the region of the centre angle (α) in the tangential direction by an amount (Y).

4. Device according to claim 1, **characterised in that** recesses (21; 22) are provided in the edge regions of the mould segments, into which recesses non-recessed edge regions of adjacent mould segments can enter without contacting one another.

5. Device for producing thread bundles according to claim 2, **characterised in that** the mould segments (1; 2; 3; 4) are rotatably mounted on the common frame (14) on respective pivots (10, 11, 12, 13) so as to be driven independently of one another.

6. Device for producing thread bundles according to claim 5, **characterised in that** in each case at least one of the rotatable mould segments (1; 4) can be moved, independently of one another, alternately forwards and/or backwards on each side of the stationary mould segment (5) when wrapping the skein.

7. Device according to any of the preceding claims, **characterised in that** respective pivot axes (10; 11, 12, 13) of the four mould segments (1; 2, 3, 4) are arranged on the same side of a plane (E), in particular a horizontal plane, that contains the central axis (19) of the bundle (20), in particular in such a way that the pivot axes (11, 12) of the two mould segments (2, 3) that are closer to the central axis (19) are arranged closer to the plane (E) and/or the central axis (19) than the pivot axes (10, 13) of the two other mould segments (1, 4) that are further from the central axis (19).

8. Device according to any of the preceding claims, **characterised in that** at least two of the pivotable mould segments (1; 2, 3, 4) can be sequentially pivotably driven by their own drive elements (35, 36), in particular electromotors, in each case, in particular the respective drive elements (35, 36) being connected to a common control apparatus (S) via respective lines (35', 36').

9. Method for producing thread bundles on a device according to any of claims 1 to 8, **characterised in that** at least two mould segments (1; 4) are moved alternately forwards and/or backwards when wrapping the skein such that an outer edge (42) of the film pushes against the inner face (43) of the opposite end of the film and is clamped there by said inner face.

10. Method for producing thread bundles on a device according to any of claims 1 to 8, **characterised in that** oscillations are superimposed on the closing movement of the mould segments (1; 2; 3; 4) such that the internal pressure resulting from compression of the threads in the bundle is temporarily increased in one portion of the bundle cross section and is reduced in another portion.

## Revendications

1. Dispositif destiné à la fabrication de faisceaux de fils, qui entoure avec un film un écheveau composé d'une multiplicité de fils individuels, en particulier de fils creux semi-perméables pour filtres de dialyse, et le forme en un faisceau ayant une section transversale approximativement circulaire, au moins quatre segments de forme (1 ; 2 ; 3 ; 4) devant être déplacés indépendamment les uns des autres vers un centre du cercle (19),
**caractérisé en ce que** les quatre segments de forme (1 ; 2 ; 3 ; 4) sont guidés de telle sorte que les contours de leurs sections transversales, à proximité de la circonférence du cercle (20) appartenant au centre du cercle (19), forment conjointement une ligne fermée qui se rapproche d'un cercle.

2. Dispositif selon la revendication 1, **caractérisé en ce que**
- les segments de forme (1 ; 2 ; 3 ; 4) sont supportés en rotation sur un bâti (14) commun,
- et **en ce qu'**en plus un segment de forme (5) fixe est prévu,
- et **en ce que**, symétriquement à cela, respectivement deux segments de forme (1 ; 2) et (3. 4) rotatifs sont disposés des deux côtés.

3. Dispositif selon la revendication 1, **caractérisé en ce que**
- les sections transversales des segments de forme (1 ; 2 ; 3 ; 4 ; 5) ont des contours en forme d'arc de cercle vers le côté intérieur,
- et **en ce que** ceux-ci sont prolongés d'une dimension (Y) des deux côtés au-delà de la zone de l'angle au centre (a) dans la direction tangentielle.

4. Dispositif selon la revendication 1, **caractérisé en ce que**,
dans les zones de bord des segments de forme, il est prévu des évidements (21 ; 22) dans lesquels des zones de bord non évidées de segments de forme voisins peuvent plonger sans se toucher mutuellement.

5. Dispositif destiné à la fabrication de faisceaux de fils selon la revendication 2, **caractérisé en ce que** les segments de forme (1 ; 2 ; 3 ; 4) sont supportés en rotation sur le bâti (14) commun sur les points de rotation (10, 11, 12, 13) en étant entraînés indépendamment les uns des autres.

6. Dispositif destiné à la fabrication de faisceaux de fils selon la revendication 5, **caractérisé en ce que**,
des deux côtés du segment de forme (5) fixe, respectivement au moins un des segments de forme (1 ; 4) rotatifs est mobile alternativement vers l'avant et/ou vers l'arrière lors de l'enroulement de l'écheveau, de façon mutuellement indépendante.

7. Dispositif selon l'une des revendications précédentes, **caractérisé en ce que** des axes de pivotement (10 ; 11, 12, 13) des quatre segments de forme (1 ; 2, 3, 4) sont disposés sur le même côté d'un plan (E), en particulier horizontal, contenant l'axe central (19) du faisceau (20), en particulier de telle sorte que les axes de pivotement (11, 12) des deux segments de forme (2, 3) plus proches de l'axe central (19) sont disposés plus près sur le plan (E) et/ou sur l'axe central (19) que les axes de pivotement (10, 13) des deux autres segments de forme (1, 4) plus éloignés de l'axe central (19).

8. Dispositif selon l'une des revendications précédentes, **caractérisé en ce qu'**au moins deux des segments de forme (1 ; 2, 3, 4) pivotants peuvent être entraînés de façon séquentiellement pivotante par respectivement de propres éléments d'entraînement (35, 36), en particulier des moteurs électriques, les éléments d'entraînement (35, 36) respectifs étant en particulier raccordés à un appareil de commande (S) commun par le biais de lignes (35', 36').

9. Procédé destiné à la fabrication de faisceaux de fils sur un dispositif selon l'une des revendications 1 à 8, **caractérisé en ce que**,
lors de l'enroulement du faisceau, au moins deux segments de forme (1 ; 4) sont déplacés alternativement vers l'avant et/ou vers l'arrière de telle sorte qu'une arête extérieure (42) du film heurte le côté intérieur (43) du côté de film opposé et y est coincée par celui-ci.

10. Procédé destiné à la fabrication de faisceaux de fils sur un dispositif selon l'une des revendications 1 à 8, **caractérisé en ce que**
des oscillations se superposent au mouvement de fermeture des segments de forme (1 ; 2 ; 3 ; 4) de telle sorte que la pression intérieure créée par la compression des fils dans le faisceau est augmentée brièvement dans une zone partielle de la section transversale de faisceau et est réduite dans une autre zone partielle.
